(19) Europäisches Patentamt
European Patent Office
Office européen des brevets

(11) **EP 2 627 932 B1**

(12) **EUROPÄISCHE PATENTSCHRIFT**

(45) Veröffentlichungstag und Bekanntmachung des Hinweises auf die Patenterteilung:
**29.07.2015   Patentblatt 2015/31**

(21) Anmeldenummer: **11757308.9**

(22) Anmeldetag: **14.09.2011**

(51) Int Cl.:
*F16H 61/70* (2006.01)       *F16H 61/688* (2006.01)
*F16H 37/04* (2006.01)

(86) Internationale Anmeldenummer:
**PCT/EP2011/065924**

(87) Internationale Veröffentlichungsnummer:
**WO 2012/048977 (19.04.2012 Gazette 2012/16)**

(54) **VERFAHREN ZUR STEUERUNG EINES ANTRIEBSSTRANGS**

METHOD FOR CONTROLLING A DRIVE TRAIN

PROCÉDÉ DE COMMANDE DE CHAÎNE CINÉMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2010   DE 102010042267**

(43) Veröffentlichungstag der Anmeldung:
**21.08.2013   Patentblatt 2013/34**

(73) Patentinhaber: **ZF Friedrichshafen AG**
**88038 Friedrichshafen (DE)**

(72) Erfinder:
• SCHNEIDER, Florian
  88161 Lindenberg (DE)
• MAIR, Roland
  88069 Tettnang (DE)

(56) Entgegenhaltungen:
EP-A1- 1 624 232     DE-A1-102005 033 027
FR-A1- 2 821 802     US-A- 4 966 048

**Beschreibung**

Die Erfindung betrifft ein Verfahren zur Steuerung von Schaltungen eines Teildoppelkupplungsgetriebes gemäß dem Oberbegriff des Patentanspruchs 1.

Aus Komfort- und Leistungsgründen werden in Nutzfahrzeugen zunehmend automatisierte Getriebe mit Lastschaltfähigkeiten eingesetzt. Dabei sind zugkraftunterbrechungsfrei schaltende Doppelkupplungsgetriebe besonders attraktiv. Solche automatisierten Schaltgetriebe umfassen ein Vorgelegegetriebe oder mehrere hintereinander geschaltete Vorgelege-Getriebegruppen und gegebenenfalls ein nachgeschaltetes Planetengetriebe. Die Gänge in einem klassischen Doppelkupplungsgetriebe sind in zwei Getriebezweigen in eine gerade und eine ungerade Ganggruppe unterteilt, wobei jeder Gruppe eine Kupplung der Doppelkupplung zugeordnet ist. Mit Hilfe der Doppelkupplung ist eine sequenzielle, quasi zugkraftunterbrechungsfreie Schaltfolge möglich, wobei jeweils der folgende Gang in dem aktuell lastfreien Getriebezweig vorgewählt ist und der Gangwechsel durch ein überschneidendes Betätigen beider Kupplungen erfolgt. Der Kraftfluss der Gänge kann in konventioneller Weise über eine Antriebswelle und eine Abtriebswelle laufen, oder er kann sich über mehrfach wechselnde Wellen durch das Getriebe winden.

Gegenüber reinen Lastschaltautomaten in Planetenbauweise haben automatisierte Schaltgetriebe Wirkungsgrad- und Kostenvorteile. Allerdings steigen mit zunehmender Gangzahl die Baugröße sowie der Konstruktionsaufwand und somit die Herstellungskosten. Da Nutzfahrzeuggetriebe, je nach Einsatzgebiet, in der Regel zur Realisierung einer bestimmten Getriebespreizung und für einen effizienten Betrieb eine relativ hohe Gangzahl benötigen, ist es insbesondere für Nutzfahrzeuganwendungen zweckmäßig, auch kostengünstigere und kompakter bauende Getriebe-Mischformen, so genannte Teildoppelkupplungsgetriebe, zu betrachten, bei denen neben einem lastschaltenden Getriebe oder Getriebeteil mit einer Doppelkupplung ein konventionelles, also zugkraftunterbrechend schaltendes Getriebeteil, beispielsweise eine Hauptgetriebegruppe bzw. ein nachgeordnetes zugkraftunterbrechend schaltendes Getriebe, beispielsweise ein Verteilergetriebe oder Achsgetriebe, angeordnet ist. Diese Teildoppelkupplungsgetriebe verhalten sich je nach ausgeführter Schaltung wie ein konventionelles automatisiertes Schaltgetriebe, also mit dem Nachteil einer Zugkraftunterbrechung, wenn der Gangwechsel im Hauptgetriebeteil erfolgt, bzw. wie ein Lastschaltgetriebe, wenn der Gangwechsel im Doppelkupplungsgetriebeteil erfolgt.

Die DE 10 2008 008 496 A1 zeigt beispielsweise ein Stufengetriebe, das in seiner Funktionsweise einem Teildoppelkupplungsgetriebe entspricht. Das Stufengetriebe weist eine erste und eine zweite Eingangswelle auf, die über jeweils eine Kupplung einer Doppelkupplung mit einem Antriebsmotor verbindbar sind, sowie eine Vorgelegewelle, an welche die zwei Eingangswellen über einen ersten bzw. einen zweiten Eingangsradsatz mit unterschiedlichen Übersetzungsverhältnissen angekoppelt sind. Eine Abtriebswelle ist wahlweise über verschiedene weitere Radsätze an die Vorgelegewelle ankoppelbar. Ein bidirektionaler Gangwechsel zwischen einem ersten Gang und einem zweiten Gang ist ohne weitere Schaltvorgänge durch ein überschneidendes Öffnen bzw. Schließen der beiden Kupplungen zugkraftunterbrechungsfrei möglich, da der Kraftfluss in diesen Gängen lediglich zwischen dem ersten und dem zweiten Eingangsradsatz wechselt, aber über denselben weiteren Radsatz zum Abtrieb läuft. Die übrigen Gangwechsel erfordern ein Umschalten von beteiligten Gangkupplungen mit der Folge einer Zugkraftunterbrechung.

Die Komfort- und Performanceeinbußen durch zugkraftunterbrochene Gangwechsel werden noch verstärkt durch den Ladedruckverlust von turboaufgeladenen Verbrennungsmotoren. Abgasturbolader werden bei den meisten Dieselmotoren und mittlerweile auch bei vielen Ottomotoren eingesetzt. Ein Abgasturbolader besitzt eine Turbine, welche die im Abgas enthaltene kinetische Energie zum Antrieb eines Verdichters nutzt, der seinerseits Frischluft ansaugt und vorverdichtet den Zylindern des Motors zu dessen Leistungssteigerung zuführt. Er wird somit ohne direkten Zusammenhang mit der Motordrehzahl vom Abgasstrom angetrieben. Eine unzureichende Turboaufladung hat zusätzlich zum Geschwindigkeitsverlust bei zugkraftunterbrochenen Schaltungen bei einem entsprechenden Fahrwiderstand eine Durchzugsschwäche zur Folge, die bei einer starken Beschleunigungsanforderung im unteren Motordrehzahlbereich allgemein als Turboloch bekannt ist. Wenn der Ladedruck des Turboladers zunächst aufgebaut werden muss, steht demnach das Saugmoment zur Erreichung des Volllastmomentes des Motors erst oberhalb einer Ladegrenzdrehzahl zur Verfügung. Da die geförderte Luftmenge sich etwa quadratisch zur Ladedrehzahl verhält, ist die Zeitspanne nach einer Lastaufschaltung zwischen dem Erreichen des Saugmomentes und dem stationär erreichbaren Motormoment als Durchzugsschwäche deutlich spürbar. Insbesondere bei Nutzfahrzeugdieselmotoren ist diese Zeitspanne und somit der Übergang in den aufgeladenen Betriebsbereich häufig besonders groß.

Teildoppelkupplungsgetriebe unterliegen, wenn ein Schaltvorgang im konventionellen Getriebeteil stattfindet, dieser Problematik wie alle konventionellen automatisierten Getriebe. Zur Vermeidung des Turbolochs sind zwar elektrische oder mechanische Zusatzantriebe des Abgasturboladers oder Zusatzverdichter bekannt, um den Ladedruck bei unzureichender kinetischer Ladeenergie des Motors zu erhöhen. Diese Einrichtungen sind jedoch relativ kostenaufwendig und benötigen einen zusätzlichen Bauraum.

Aus der nicht vorveröffentlichten Patentanmeldung DE 10 2010 028 076.3 ist ein Verfahren zur Schaltsteuerung eines automatisierten Schaltgetriebes mit einem vorgeschalteten hydrodynamischen Anfahr- und Bremselement bekannt, mit dem bei einer Zugschaltung das Auftreten einer Durchzugsschwäche eines turboaufgeladenen Antriebsmotors beim Lastaufbau nach der Schaltung vermieden werden kann. Darin ist ein hydrodynamischer Drehmomentwandler mit einem Pumpenrad, einem Turbinenrad und einem Umlenkrad oder eine hydrodynamische Kupplung bei Wegfall des Umlenkrades, angeordnet, bei dem das Pumpenrad über eine Überbrückungskupplung mit einer mit einer Getriebeeingangswelle verbundenen Zwischenwelle ververbindbar ist, und das Turbinenrad über eine Freilaufkupplung mit der Zwischenwelle verbindbar sowie über eine Turbinenbremse gegenüber einem ortsfesten Gehäuse abbremsbar ist. Der Lastabbau für das Auslegen des Ganges zu Beginn der Zugschaltung erfolgt unter Aufrechterhaltung des vom Antriebsmotor abgegebenen Motormomentes durch den Aufbau eines entsprechend hohen Widerstandsmomentes, indem die Turbinenbremse zumindest teilweise geschlossen und das von dem Anfahr- und Bremselement auf die Turbinenbremse übertragene Drehmoment auf das Motormoment des Antriebsmotors eingestellt wird. Dadurch kann der Gang weitgehend drehmomentfrei ausgelegt werden. Nach der Synchronisierung und dem Einlegen des Zielganges wird die Turbinenbremse wieder geöffnet, so dass am Motor die Last des neuen Ganges anliegt. Da das Motormoment zum Lastabbau nicht reduziert wird, entfällt der störende Einbruch des vom turboaufgeladenen Antriebsmotor unter Last spontan abgegebenen Motormomentes.

Bei dem bekannten Verfahren wird die Auswirkung eines Turbolochs mittels eines hydrodynamischen Wandlers bzw. dessen Turbinenbremse reduziert. Bei einem Teildoppelkupplungsgetriebe ist ein derartiges Anfahr- und Bremselement nicht vorhanden, sondern vielmehr eine Doppelkupplung angeordnet. Das bekannte Verfahren ist somit nicht auf die Problematik eines Turbolochs bei einem Schaltvorgang in einem Teildoppelkupplungsgetriebe übertragbar.

Aus der DE 10 2005 033 027 A1, die die Merkmale des Oberbegriffs von Anspruch 1 offenbart, ist ein automatisiertes Lastschaltgetriebe mit einer Doppelkupplung bekannt, bei welchem eine Getriebeausgangswelle koaxial zur getriebeeingangsseitigen Doppelkupplung angeordnet ist, wobei sämtliche nicht direkten Vorwärtsgänge im Leistungspfad über dieselbe Vorgelegewelle verlaufen.

Vor diesem Hintergrund liegt der Erfindung die Aufgabe zugrunde, ein Verfahren zur Steuerung von Schaltungen eines Teildoppelkupplungsgetriebes vorzuschlagen, mit dem kostengünstig eine Durchzugsschwäche eines turbo aufgeladenen Antriebsmotors nach einer Zugschaltung vermieden oder deren unerwünschte Wirkung zumindest erheblich verringert werden kann.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei Getrieben, die ein lastschaltendes Doppelkupplungsgetriebeteil und ein nachfolgendes, zugkraftunterbrechend schaltendes konventionelles Getriebeteil umfassen, die Doppelkupplung bei einem Gangwechsel im konventionellen Getriebeteil durch den Aufbau eines Verspannungmoments eingesetzt werden kann, um ein Lastmoment zu erzeugen, an dem sich das Moment eines als turboaufgeladener Verbrennungsmotor ausgebildeten Antriebsmotors abstützt. Das Verspannungsmoment soll zur Lastaufschaltung auf den Antriebsmotor und/oder zum Lastabbau im konventionellen Getriebeteil genutzt werden. Insbesondere soll der Ladedruck eines Abgasturboladers während der Schaltung oberhalb eines Grenzwertes gehalten oder unmittelbar nachdem das Getriebe im konventionellen Teil in Neutral geschaltet ist, in kurzer Zeit wieder aufgebaut werden. Gleichzeitig soll mittels der Doppelkupplung der Zielgang im konventionellen Getriebeteil synchronisiert werden. Im neuen Gang kann damit das Auftreten eines spürbaren Turbolochs verhindert werden.

Demnach geht die Erfindung aus von einem Verfahren zur Steuerung von Schaltungen eines Teildoppelkupplungsgetriebes, beispielsweise eines Nutzfahrzeuges, mit einem ersten Teilgetriebe, das als ein Doppelkupplungsgetriebe ausgebildet ist, mit einer Doppelkupplung, die eine erste Kupplung und eine zweite Kupplung umfasst, über die das Doppelkupplungsgetriebe mit einem als ein turboaufgeladener Verbrennungsmotor ausgebildeten Antriebsmotor wirkverbindbar ist, und mit einem dem Doppelkupplungsgetriebe in einem Antriebsstrang nachgeordneten zweiten Teilgetriebe, das als ein zugkraftunterbrechend schaltendes Hauptgetriebe ausgebildet ist. Zur Lösung der gestellten Aufgabe sieht die Erfindung vor, dass während einer Zugschaltung mit einem Gangwechsel im Hauptgetriebe die erste Kupplung und die zweite Kupplung zumindest teilweise geschlossen werden, so dass sie gegeneinander verspannt werden, wobei ein dem Antriebsmotor entgegenwirkendes Moment erzeugt wird, wodurch der Ladedruck des Antriebsmotors während der Zugschaltung weitgehend aufrechterhalten oder zumindest in zeitlicher Nähe zu der Zugschaltung aufgebaut wird.

Das Verfahren kann vorteilhaft sowohl bei Anordnungen angewandt werden, die ein Getriebe mit einem motorseitigen Doppelkupplungsgetriebeteil und einem nachfolgenden konventionellen, d.h. zugkraftunterbrechend schaltenden Getriebeteil aufweisen, als auch bei Anordnungen, die ein vollständiges Doppelkupplungsgetriebe und ein nachfolgendes konventionelles Getriebe, beispielsweise ein schaltbares Verteiler- oder Achsgetriebe, umfassen. Den beiden Kupplungen des Doppelkupplungsgetriebes bzw. Doppelkupplungsgetriebeteils ist jeweils ein eingängiger oder mehrgängiger Doppelkupplungsgetriebezweig zugeordnet. Im Folgenden wird unter Doppelkupplungsgetriebe sowohl ein vollständiges Getriebe als auch ein Getriebeteil verstanden. Als Hauptgetriebe wird ein Getriebe oder Getriebeteil verstanden, welches im Kraftfluss nach dem Doppelkupplungsgetriebe bzw. Doppelkupplungsgetriebeteil folgt und in seiner Ausführung einem klassischen Stufengetriebe entspricht, welches unsynchronisiert mit Klauenschaltelementen oder synchronisiert mit Synchronschaltpaketen ausgebildet sein kann.

Das Verfahren wird nur für Zugschaltungen, d.h. für Zughochschaltungen und Zugrückschaltungen benötigt, da eine Vermeidung des Turbolochs nur im Zugbetrieb notwendig ist, während im Schubbetrieb das Schleppmoment des Antriebsmotors wirksam ist.

Durch das erfindungsgemäße Verfahren werden die nachteiligen Auswirkungen eines Turbolochs bei Schaltungen im konventionellen Getriebeteil bei einem Teildoppelkupplungsgetriebe weitgehend vermieden. Vielmehr steht im Gegensatz zu dem üblichen verzögerten Ansprechverhalten des Antriebs im Anschluss an eine Zugschaltung unmittelbar ein ausreichendes Momentangebot zur Verfügung, wodurch eine höhere Performance und ein höherer Schaltkomfort erreicht werden. Damit können insbesondere Schaltungen in schwierigen Fahrsituationen, beispielsweise an Steigungen mit schwerer Ladung, oder ein zügiges Fortkommen auf Schnellstraßen ermöglicht oder erleichtert werden. Grundsätzlich sind bei Zughochschaltungen auch größere Gangsprünge möglich, da aufgrund des bereits vorhandenen Ladedrucks niedrigere Anschlussdrehzahlen im Antrieb auf die Fahrzeugräder realisierbar sind. Das erfindungsgemäße Verfahren ermöglicht es somit, dass insbesondere ein Nutzfahrzeuggetriebe als ein vergleichsweise kostengünstiges und kompakt bauendes Teildoppelkupplungsgetriebe konzipiert werden kann, das weitgehend die Komfortvorteile eines reinen Lastschaltgetriebes bzw. Doppelkupplungsgetriebes besitzt.

Zum Aufbau eines Verspannungsmomentes der Doppelkupplung wird vorzugsweise eine der beiden Kupplungen im Haften und die andere der beiden Kupplungen im Schlupf betrieben. Dadurch wird ein Lastmoment auf den Antriebsmotor aufgebracht, das verhindert, dass der Ladedruck einbricht bzw. dazu beiträgt den einbrechenden Ladedruck wieder aufzubauen. Die haftende Kupplung muss unter Berücksichtigung der Übersetzungsverhältnisse im Doppelkupplungsgetriebeteil mindestens soweit geschlossen werden bzw. geschlossen bleiben, dass sie das anliegende Verspannungsmoment auch sicher übertragen kann. Ist die haftende Kupplung auch die lastführende Kupplung im neuen Gang, so kann sie zur Vereinfachung auch von vornherein vollständig geschlossen werden bzw. geschlossen bleiben. Ist die haftende Kupplung hingegen nicht die lastführende Kupplung im neuen Gang, ist es für den Schaltablauf günstiger, die haftende Kupplung während der Schaltung nur soweit wie nötig zu schließen. Grundsätzlich ist es auch möglich, dass sich bei der Verspannung beide Kupplungen im Schlupf befinden. Allerdings ist eine gleichzeitige Regelung beider Kupplungsmomente im Schlupfbetrieb zur Einstellung des Verspannungsmomentes auf das Motormoment relativ schwierig.

Bei einer ersten Ausführungsform des Verfahrens kann vorgesehen sein, dass zu Beginn der Schaltung ein Lastabbau im Hauptgetriebe erfolgt, indem das Motormoment reduziert und bedarfsweise die aktuell lastführende Kupplung geöffnet wird, bis der aktuell im Hauptgetriebe eingelegte Gang weitgehend lastfrei ausgelegt werden kann. Demnach wird die Last in üblicher Weise am Verbrennungsmotor abgebaut, wobei der Ladedruck des Turboladers beginnt einzubrechen. Der aktuelle Gang kann bei Annähern oder Erreichen der Drehmomentfreiheit ausgelegt werden. Unmittelbar nach dem Auslegen des Ganges wird die Doppelkupplung verspannt, wobei ein dem Antriebsmotor entgegenwirkendes Moment erzeugt wird und eine Drehzahlanpassung zur Einstellung eines Synchronlaufs an den zu schaltenden Komponenten des einzulegenden Ganges erfolgt. Demnach wird, sobald sich der konventionelle Getriebeteil in Neutral befindet, sofort der Motor über die Verspannung der Doppelkupplung belastet und somit einem weiteren Abbau des Ladedruckes entgegengewirkt. Gleichzeitig wird über die Verspannung der beiden Kupplungen die Motordrehzahl so eingestellt, dass sich, unter Berücksichtigung der Übersetzung des Doppelkupplungsgetriebes, am Getriebeeingang des Hauptgetriebes und damit an dem zu schaltenden Losrad und der zugehörigen Gangkupplung des Zielganges, die als eine Klauenkupplung oder Synchronkupplung ausgebildet sein kann, ein Gleichlauf einstellt. Nach dem Einlegen des neuen Ganges bei Erreichen der Zieldrehzahl erfolgt der Lastaufbau im Hauptgetriebe, d.h. im Antriebsstrang bis zu den angetriebenen Fahrzeugrädern nach dem Doppelkupplungsgetriebeteil. Da der Motor zu diesem Zeitpunkt durch die Doppelkupplung bereits unter Last steht, muss das Verspannungsmoment der Doppelkupplung wieder abgebaut werden. Dazu wird die Verspannung der Doppelkupplung gelöst, indem die lastführende Kupplung im neuen Gang geschlossen bleibt oder geschossen wird und die andere Kupplung vollständig geöffnet wird.

Diese Ausführungsvariante, bei welcher der Ladedruckverlust reduziert wird, indem der Motor bereits während der Getriebeverstellung im Hauptgetriebe wieder belastet wird, eignet sich besonders für komfortorientierte Schaltungen, d.h. für Schaltungen mit dem Zielkriterium "Schaltung mit maximalem Komfort", bei denen diejenige der beiden Kupplungen, die nach der Schaltung lastführend ist, bereits während der Drehzahlanpassung geschlossen ist bzw. sich im Haften befindet, damit keine Schaltstöße durch zusätzliche Kupplungsbetätigungen auftreten können. Zudem ist aufgrund des konventionellen Lastabbaus durch Motormomentreduzierung das Auslegen des Ganges besonders einfach und komfortabel durchführbar.

Bei einer zweiten Ausführungsform des Verfahrens kann vorgesehen sein, dass zu Beginn der Schaltung ein Lastabbau im Hauptgetriebe erfolgt, indem ein dem Antriebsmotor entgegenwirkendes Moment durch Verspannen der Doppelkupplung erzeugt wird, wobei die aktuell nicht lastführende der beiden Kupplungen in Schlupf gebracht und die aktuell lastführende Kupplung geschlossen oder zumindest teilgeschlossen bleibt, bis der aktuell im Hauptgetriebe eingelegte Gang weitgehend lastfrei ausgelegt werden kann. Demnach wird die Last im Getriebe dadurch abgebaut, dass das Motormoment durch das Verspannungsmoment der Doppelkupplung kompensiert wird. Das Moment im Antriebsstrang nach dem Doppelkupplungsgetriebeteil wird dadurch soweit abgebaut, bis das Auslegen des Ganges im konventionellen Getriebeteil möglich ist. Der Verbrennungsmotor steht somit während der Schaltung permanent unter Last. Dies hat den Vorteil, dass der Ladedruck während der Schaltung weitgehend erhalten bleibt, so dass das Turboloch nahezu vollständig vermieden wird. Die Drehzahlanpassung zur Einstellung des Synchronlaufs an den zu schaltenden Komponenten des einzulegenden Ganges erfolgt analog zur ersten Ausführungsvariante. Lediglich der Startzeitpunkt des Verspannungsmomentes bzw. des Motormomentes ist verschieden. Der Lastaufbau nach dem Einlegen des neuen Ganges im Hauptgetriebe erfolgt wiederum, indem die lastführende Kupplung im neuen Gang geschlossen bleibt oder geschossen wird und die andere Kupplung vollständig geöffnet wird.

Diese Ausführungsvariante mit einem Lastabbau ohne Ladedruckverlust eignet sich besonders für leistungsorientierte Schaltungen, d.h. für Schaltungen mit dem Zielkriterium "Schaltung mit maximaler Performance", bei denen eine möglichst kurze Schaltzeit angestrebt wird, wobei gegebenenfalls die lastführende Kupplung während der Schaltung wechselt und eine für das Auslegen des Ganges im Hauptgetriebe ausreichende Drehmomentminimierung durch hinreichend genaues Einstellen des Verspannungsmomentes auf das Motormoment erreicht wird.

Außerdem kann vorgesehen sein, dass die Drehzahlanpassung unabhängig von gegebenenfalls vorhandenen Synchronschaltkupplungen im Hauptgetriebe erfolgt. Die Drehzahlanpassung an den Zielgang im Hauptgetriebe wird danach stets wie bei einem unsynchronisierten Gang durchgeführt. Dementsprechend wird die Synchrondrehzahl aktiv eingestellt, selbst wenn die Gangkupplung mechanische Synchronisationselemente besitzt, da ansonsten die Synchronkupplung auch den Antriebsmotor und die im neuen Gang lastführende Kupplung mit synchronisieren müsste. Dafür sind die üblichen Synchronschaltpakete in der Regel nicht ausgelegt, so dass sie überlastet werden könnten. Eine stärkere Auslegung der Synchronkupplung würde zusätzliche Kosten verursachen.

Während der Drehzahlanpassung wird die Drehzahl des Zielganges eingestellt. Gleichzeitig soll die Last am Verbrennungsmotor möglichst groß sein, um den Ladedruck des Turboladers aufrecht zu erhalten bzw. möglichst schnell aufzubauen. Da das Erreichen der Zieldrehzahl sinnvollerweise präferiert wird, kann bei der Drehzahlanpassung vorgesehen sein, die Kupplungsmomente so einzustellen, dass die Zieldrehzahl mit einer gewünschten bzw. vorgegebenen Dynamik erreicht wird. Wenn bei der Drehzahlanpassung eine Kupplung geschlossen ist und die andere Kupplung teilgeschlossen ist, also im Schlupf betrieben wird, bestimmt die im Schlupf betriebene Kupplung das auf den Antriebsmotor wirkende Lastmoment. Demnach wird die schlupfende Kupplung soweit geschlossen, dass sich der gewünschte Drehzahlverlauf in Richtung Zieldrehzahl einstellt und der Motor dabei hinsichtlich des Ladedrucks ausreichend belastet wird.

Um ein größtmögliches Lastmoment am Verbrennungsmotor und damit einen bestmöglichen Erhalt bzw. Aufbau des Ladedrucks des Turboladers zu erreichen, kann vorgesehen sein, dass über eine Motorsteuerung eine maximal mögliche Kraftstoffeinspritzmenge des Antriebsmotors vorgegeben wird und die Drehzahlanpassung nur durch Regeln des Verspannungsmomentes der Doppelkupplung erfolgt.

Die Praxis zeigt allerdings, dass die Regelbarkeit einer Doppelkupplung oft nicht ausreicht, um eine bestimmte Drehzahl mit einer gewünschten Genauigkeit einstellen zu können, ohne gleichzeitig den Motor zu beeinflussen. Daher kann auch vorgesehen sein, dass über die Motorsteuerung eine Zieldrehzahl vorgegeben wird, und dass das Verspannungsmoment der Doppelkupplung derart variiert wird, dass diese Zieldrehzahl mittels der Motorsteuerung bzw. mit Hilfe eines die Kraftstoffeinspritzmenge steuernden Drehzahlreglers erreichbar ist. Demnach wird die Motorlast durch eine Regelung der Doppelkupplung gerade soweit reduziert, dass der Drehzahlregler die Zieldrehzahl sicher und ausreichend genau einstellen kann. Die Motorbelastung liegt dabei nur unwesentlich unterhalb der möglichen Maximalbelastung.

Da das Verspannen der Doppelkupplung zur Folge hat, dass in die jeweils schlupfende Kupplung Reibarbeit eingetragen und damit die Kupplung belastet wird, ist es sinnvoll, das Verfahren nicht automatisch bei jeder Zugschaltung durchzuführen, um die Kupplungen nicht unnötig zu beanspruchen, sondern immer nur dann, wenn die Auswirkungen des Turbolochs bei einem Schaltvorgang als besonders leistungs- bzw. komfortbeeinträchtigend bewertet sind und die Kupplungsbelastung ein bestimmtes Maß nicht übersteigt.

Daher kann vorgesehen sein, dass die ladedruckrelevante Verspannung der Doppelkupplung bei einer Zugschaltung immer dann erfolgt, wenn der aus Rollwiderstand, Steigungswiderstand, Beschleunigungswiderstand und Luftwiderstand resultierende Fahrwiderstand nach der Zugschaltung im neu eingelegten Gang in seiner Wirkung das Saugmoment des Motors übersteigen würde. In diesem Fall könnte das Turboloch die Fahrbarkeit des Fahrzeuges im neuen Gang stark einschränken.

Es kann auch vorgesehen sein, dass die ladedruckrelevante Verspannung der Doppelkupplung bei einer Zugschaltung immer dann erfolgt, wenn ein durch einen Kickdown oder eine einen Grenzwert überschreitende Fahrpedalstellung angezeigter Leistungswunsch einen vorgegebenen Schwellwert übersteigt, also insbesondere dann, wenn ein Fahrerwunsch nach einer maximalen Fahrleistung vorliegt.

Außerdem kann vorgesehen sein, dass die ladedruckrelevante Verspannung der Doppelkupplung bei einer Zugschaltung immer dann erfolgt, wenn dies anhand eines vorab bestimmten Komfortmaßes oder Performancemaßes als zweckmäßig erkannt ist. Ein Komfort- oder Performancemaß kann aus mehreren relevanten aktuellen Betriebsparametern abgeleitet werden, beispielsweise - zusätzlich zum Fahrwiderstand und dem Fahrerwunsch - aus der Fahrsituation, der Fahrzeugmasse, dem Streckenprofil und dem Einsatzfall des Fahrzeuges. Gegebenenfalls steht ein solches Maß zur Steuerung anderer Funktionen ohnehin zur Verfügung und kann als ein Initiierungskriterium des erfindungsgemäßen Verfahrens genutzt werden.

Weiterhin kann vorgesehen sein, dass die ladedruckrelevante Verspannung der Doppelkupplung bei einer Zugschaltung nur dann erfolgt, wenn bei einer aktuell festgestellten Kupplungsbelastung eine vorab bestimmte Belastungsreserve zumindest einer der beiden Kupplungen dies zulässt. Mit Hilfe der Zielkriterien "Schaltung mit maximaler Performance" oder "Schaltung mit maximalem Komfort" wird vorteilhaft ausgewählt, welche Kupplung bei der Zugschaltung im Schlupf und welche im Haften betrieben wird. Dementsprechend wird zunächst die aktuelle Belastung und die Belastungsreserve der schlupfenden Kupplung überprüft.

Die Belastungsreserve wird in jedem Fall so gewählt, dass ein kritischer Belastungsgrenzwert keinesfalls überschritten wird. Dadurch kann die Doppelkupplung zuverlässig gegen einen vorzeitigen Verschleiß geschützt werden. Bei der Bestimmung der Belastungsreserve können jeweils kurzfristig zu erwartende nachfolgende Einsätze der Kupplung, beispielsweise belastungsintensive Anfahrvorgänge, Rangiervorgänge oder mehrfach aufeinander folgende Schaltvorgänge berücksichtigt werden. Außerdem können die jeweiligen Umgebungsbedingungen berücksichtigt werden. Auch kann der Einsatzbereich des Fahrzeuges, beispielsweise Fernverkehrsfahrt oder Geländefahrt, berücksichtigt werden. Die Belastungsreserve kann somit je nach Betriebssituation variieren.

Da die beiden Kupplungen unterschiedlich ausgebildet sein können, kann für jede Kupplung individuell eine Prüfung der Belastungsreserve durchgeführt werden. Darin werden zusätzlich kupplungsspezifische Kenngrößen, wie Kupplungsmasse, spezifische Wärmekapazität, Wärmeleitung, Einbausituation und ein daraus folgendes Abkühlverhalten bewertet. Falls die Belastungsreserve der als schlupfende Kupplung ausgewählten Kupplung nicht ausreichend ist, wird die Belastungsreserve der anderen Kupplung geprüft und gegebenenfalls diese Kupplung im Schlupf betrieben.

Erfüllt keine der beiden Kupplungen die Belastungskriterien wird das Verfahren nicht angewandt. Die ladedruckrelevante Verspannung der Doppelkupplung bei einer Zugschaltung erfolgt also vorteilhaft nur dann, wenn eine prognostizierte relevante Kupplungsbelastung unter einem Grenzwert liegt bzw. wenn eine aktuelle, um einen prognostizierten zusätzlichen Reibenergieeintrag erhöhte Kupplungsbelastung unter einem Grenzwert liegt. Dadurch wird die Kupplungsverspannung effektiv eingesetzt und unnötige Reibenergieeinträge vermieden und somit die Kupplungsbelastung insgesamt gering gehalten.

Bisher wurde nicht beschrieben, wie die im Schlupf zu betreibende und die im Haften zu betreibende Kupplung ausgewählt werden sollen, um die vorgenannten Zielkriterien darzustellen. Weiterhin wurde nicht beschrieben, welcher Gang oder welche Gangkombination zur bestmöglichen Realisierung dieser Zielkriterien im Doppelkupplungsgetriebeteil eingelegt werden soll, sofern ein oder beide Doppelkupplungsgetriebezweige mehr als einen Gang besitzen. Bei einer vergleichenden Betrachtung der Kupplungsmomente, Drehzahlen, Übersetzungsverhältnisse und Massenträgheitsmomente hat sich herausgestellt, dass aufgrund gegenläufiger Einflüsse der beiden Kupplungen, bei einem Teildoppelkupplungsgetriebesystem keine einfache Festlegung diesbezüglich getroffen werden kann, sondern je nach Betriebssituation jeweils abzuleiten ist. Dazu wird auf eine weitere Patentanmeldung der Anmelderin verwiesen, welche die Reduzierung der Auswirkungen einer Zugkraftunterbrechung im konventionellen Getriebeteil eines Teildoppelkupplungsgetriebes zum Gegenstand hat.

Zur Verdeutlichung der Erfindung ist der Beschreibung eine Zeichnung eines Ausführungsbeispiels beigefügt. In dieser zeigt

Fig. 1    eine schematische Darstellung eines Teildoppelkupplungsgetriebes zur Durchführung eines erfindungsgemäßen Verfahrens,

Fig. 2    ein Ersatzschaltbild des Teildoppelkupplungsgetriebes, und

Fig. 3    ein Gang-, Drehzahl- und Momentendiagramm des erfindungsgemäßen Verfahrens.

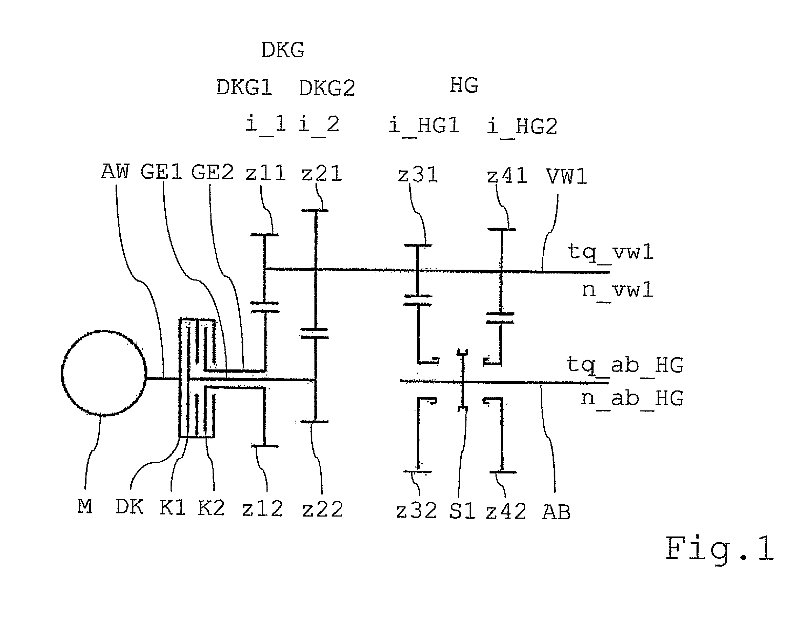

Demnach umfasst ein in Fig. 1 gezeigtes Teildoppelkupplungsgetriebe in Vorgelegebauweise ein als ein lastschaltbares Doppelkupplungsgetriebe DKG ausgebildetes erstes Teilgetriebe und ein als ein zugkraftunterbrechend schaltendes Hauptgetriebe HG ausgebildetes zweites Teilgetriebe. Das Doppelkupplungsgetriebe DKG weist eine Doppelkupplung DK mit einer ersten Kupplung K1 und einer zweiten Kupplung K2 auf. Eine Kupplungseingangsseite ist durch einen gemeinsamen Kupplungskorb dargestellt, der mit einer Antriebswelle AW eines als Verbrennungsmotor ausgebildeten Antriebsmotors M verbunden ist.

Eine erste Getriebeeingangswelle GE1 ist an ihrem motorseitigen Ende mit der ersten Kupplung K1 und an ihrem getriebeseitigen Ende mit einem Zahnrad z22 fest verbunden. Das Zahnrad z22 steht im Eingriff mit einem auf einer Vorgelegewelle VW1 drehfest angeordneten Zahnrad z21. Das Zahnradpaar z21/z22 stellt eine zweite Eingangskonstante i_2 dar, die mit der ersten Kupplung K1 einen einstufigen zweiten Doppelkupplungsgetriebezweig DKG2 bildet. Eine zweite Getriebeeingangswelle GE2 ist als eine kürzere Hohlwelle über der ersten Getriebeeingangswelle GE1 angeordnet. Sie ist an ihrem motorseitigen Ende mit der zweiten Kupplung K2 und an ihrem getriebeseitigen Ende mit einem Zahnrad z12 fest verbunden. Das Zahnrad z12 steht im Eingriff mit einem auf der Vorgelegewelle VW1 drehfest angeordneten Zahnrad z11. Das Zahnradpaar z11 /z12 stellt eine der zweiten Eingangskonstanten i_2 vorgelagerte erste Eingangskonstante i_1 dar, die mit der zweiten Kupplung K2 einen einstufigen ersten Doppelkupplungsgetriebezweig DKG1 bildet. Das Doppelkupplungsgetriebe DKG entspricht in seiner Funktionsweise einer Splittergruppe für eine nachfolgende Getriebegruppe.

Dem Doppelkupplungsgetriebe DKG antriebstechnisch nachgeordnet ist ein zweistufiges Hauptgetriebe HG mit einem ersten Hauptgetriebegang i_HG1 und einem zweiten Hauptgetriebegang i_HG2. Der erste Hauptgetriebegang i_HG1 umfasst ein auf der Vorgelegewelle VW1 drehfest angeordnetes Zahnrad z31, das im Eingriff mit einem auf einer Abtriebswelle AB drehbar angeordneten Zahnrad z32 steht. Der zweite Hauptgetriebegang i_HG2 umfasst ein auf der Vorgelegewelle VW1 drehfest angeordnetes Zahnrad z41, das im Eingriff mit einem auf der Abtriebswelle AB drehbar angeordneten Zahnrad z42 steht. Die beiden Losräder z32, z42 sind über eine als Klauenkupplung ausgebildete unsynchronisierte Schalteinrichtung S1 wechselseitig mit der Abtriebswelle AB drehfest verbindbar. An der Vorgelegewelle VW1 liegt ein Antriebsmoment tq_vw1 mit einer Antriebsdrehzahl n_vw1 an. Am Ausgang des Hauptgetriebes HG und damit des Gesamtgetriebes liegt ein resultierendes Abtriebsmoment tq_ab_HG mit einer Abtriebsdrehzahl n_ab_HG an, welches auf die angetriebenen Fahrzeugräder bzw. Achsen wirkt.

Das gezeigte Teildoppelkupplungsgetriebe dient lediglich als vereinfachte Getriebestruktur zur Veranschaulichung des prinzipiellen Aufbaus eines Teildoppelkupplungsgetriebes und des erfindungsgemäßen Verfahrens. Ein reales Teildoppelkupplungsgetriebe für ein Nutzfahrzeug kann beispielsweise zwei zweigängige Doppelkupplungsgetriebezweige und ein drei- oder viergängiges Hauptgetriebe aufweisen, so dass zwölf oder sechzehn Vorwärtsgänge und mindestens ein Rückwärtsgang zur Verfügung stehen.

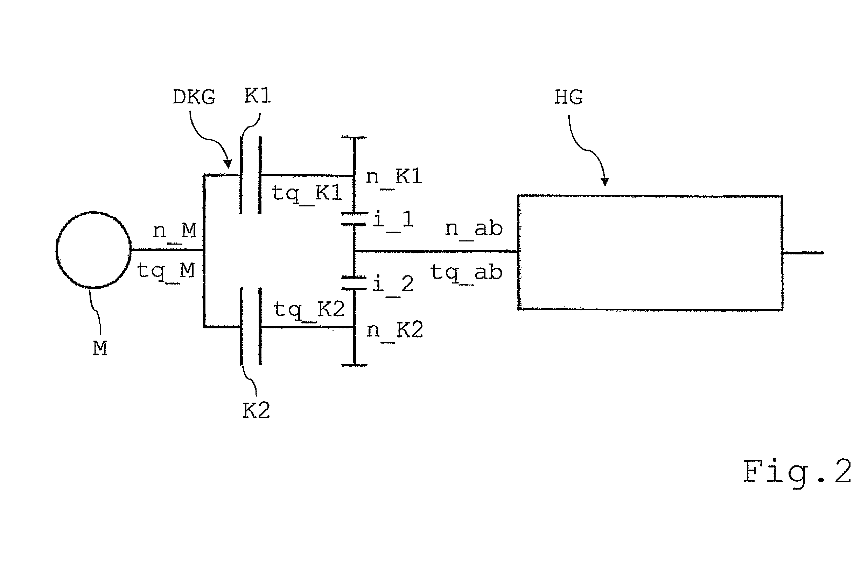

Zur Verdeutlichung der relevanten Drehmomente und Drehzahlen zeigt Fig. 2 ein Ersatzschaltbild der in Fig. 1 dargestellten Getriebestruktur. Danach liegt an der Antriebswelle AW ein Drehmoment tq_M am Antriebsmotor an. Der Antriebsmotor M bzw. dessen Antriebswelle AW dreht mit einer Motordrehzahl n_M. Über die erste Kupplung K1 ist ein Kupplungsmoment tq_K1 übertragbar. Die Kupplungsausgangsseite dreht dabei mit einer Drehzahl n_K1. Über die zweite Kupplung K2 ist ein Kupplungsmoment tq_K2 übertragbar. Die Kupplungsausgangsseite dreht dabei mit einer Kupplungsdrehzahl n_K2. Am Ausgang des Doppelkupplungsgetriebe DKG bzw. am Eingang des Hauptgetriebes HG ergibt sich ein Abtriebsmoment tq_ab und eine entsprechende Abtriebsdrehzahl n_ab.

Für die Beschreibung des Verfahrens gemäß der Erfindung soll für die Kupplungen K1 und K2 und die zugeordneten Übersetzungsverhältnisse per Definition die Beziehung $i_1 > i_2, \dfrac{i_1}{i_2} > 1, \dfrac{i_2}{i_1} < 1$ gelten. Demnach ist die Kupplung K1 definiert als die Kupplung mit dem größeren Übersetzungsverhältnis. Die obige Beziehung gilt für ein Doppelkupplungsgetriebe DKG, dessen Getriebezweige DKG1 und DKG2, wie in Fig. 1 dargestellt, jeweils nur einen Gang i_1 bzw. i_2 aufweisen. Für ein Doppelkupplungsgetriebe, das mehr als einen Gang zumindest in einem seiner beiden Getriebezweige besitzt, wird daher K1 und K2 abhängig von den gewählten Übersetzungen jeweils neu bestimmt, damit die Kupplung K1 stets als die Kupplung mit dem größeren Übersetzungsverhältnis definiert ist. Die Abkürzungen K1 bzw. K2 bezeichnen also immer diejenigen Kupplungen, die je nach den gewählten Übersetzungsverhältnissen die schnellere (K1) bzw. die langsamere (K2) Kupplung sind und entsprechend das größere bzw. das kleinere Übersetzungsverhältnis in ihrem jeweils zugeordneten Getriebezweig aufweisen.

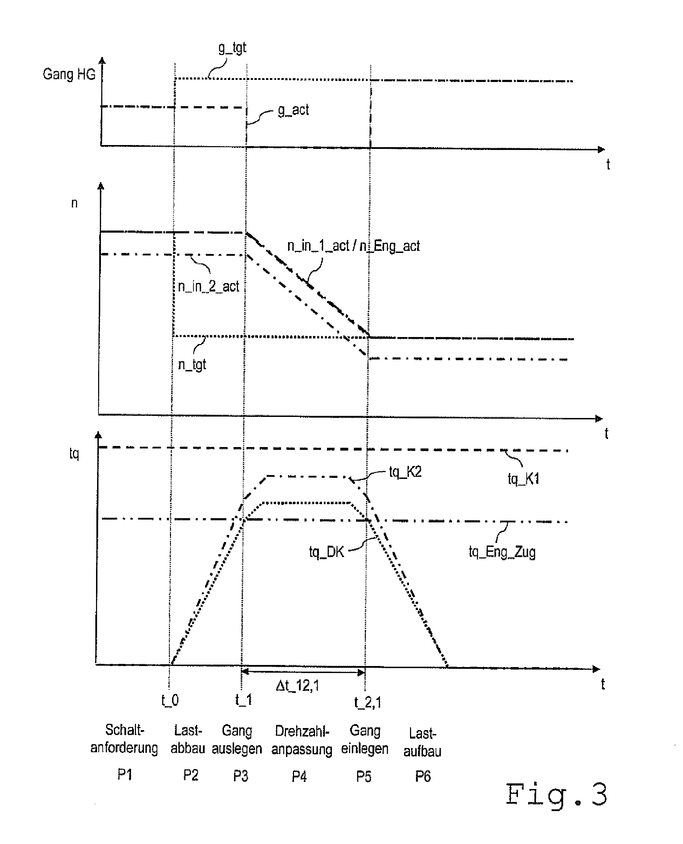

Fig. 3 zeigt beispielhaft eine idealisierte Zughochschaltung eines solchen Teildoppelkupplungsgetriebes mit einem Gangwechsel im konventionellen Getriebeteil HG, bei dem der erforderliche Lastabbau im Hauptgetriebe HG dadurch erfolgt, dass ein dem Antriebsmotor M entgegenwirkendes Moment durch Verspannen der Doppelkupplung DK erzeugt wird, wobei die lastführende Kupplung K1 nicht wechselt und dementsprechend kein Gangwechsel im Doppelkupplungsgetriebeteil DKG stattfindet.

Der Schaltablauf ist in sechs Phasen P1 bis P6 unterteilt. Dargestellt sind im oberen Diagramm die Gangkurven für den Zielgang g_tgt und den aktuellen Gang bzw. Istgang g_act. Das mittlere Diagramm zeigt die zeitlichen Verläufe der Getriebeeingangsdrehzahlen n_in_1_act der Kupplung K1 und n_in_2_act der Kupplung K2 sowie die Zieldrehzahl n_tgt des Antriebsmotors M bzw. des Getriebeeingangs und die Istdrehzahl n_Eng_act des Antriebsmotors M. Das untere Diagramm zeigt die zeitlichen Momentenverläufe tq_K1 und tq_K2 der Kupplungen K1 und K2, das resultierende Kupplungs- bzw. Verspannungsmoment tq_DK sowie das Motormoment tq_Eng_Zug im Zugbetrieb.

Daraus ist ersichtlich, dass die per Definition mit K1 bezeichnete schnellere Kupplung, d.h. diejenige Kupplung, welcher der Getriebezweig DKG1 oder DKG2 mit der größeren Übersetzung i_1 und damit bezogen auf die Abtriebsdrehzahl n_ab mit der höheren Drehzahl zugeordnet ist, als lastführende Kupplung vor und nach der Schaltung, während der Schaltung stets gleichbleibend im Haften bzw. geschlossen ist. Folglich entspricht die Drehzahl n_Eng_act des Motors M der eingangsseitigen Istdrehzahl n_in_1_act der Kupplung K1. Da die Kupplung K2 die langsamere Kupplung ist, liegt bzw. folgt ihre eingangsseitige Istdrehzahl n_in_2_act unterhalb der Istdrehzahl n_in_1_act der Kupplung K1 bzw. der Istdrehzahl n_Eng_act des Motors M. Weiterhin wird ein konstantes Motormoment tq_Eng_Zug angenommen. An der haftenden Kupplung K1 liegt ein konstantes Kupplungsmoment tq_K1 an. Damit die Kupplung K1 sicher im Haften bleibt, während die Kupplung K2 im Schlupf betrieben wird, muss für $\left|tq_{K1}\right| \geq \left|tq_{K2}\right| \cdot \dfrac{i_2}{i_1}$. das Kupplungsmoment an K1 gelten:

Bei einer Schaltanforderung P1 beginnt zu einem Zeitpunkt t_0 der Lastabbau im Hauptgetriebe HG. Dies wird durch ein Teilschließen der Kupplung K2 erreicht. Durch das Schlupfmoment der Kupplung K2 baut sich während des Lastabbaus in der zweiten Schaltphase P2 gegen das Motormoment tq_Eng_Zug das Verspannungsmoment tq_DK der Doppelkupplung DK auf. Für das zusätzliche Lastmoment tq_M1 am Motor M bzw. das Kupplungsmoment tq_K2 an der Kupplung K2 gilt:

$$\left|tq_{M1}\right| = -\left|tq_{K2}\right| \cdot \left(1 - \frac{i_2}{i_1}\right) \text{ bzw. } \left|tq_{K2}\right| = -\left|tq_{M1}\right| / \left(1 - \frac{i_2}{i_1}\right).$$

Zum Zeitpunkt t_1 entspricht das Verspannungsmoment tq_DK dem Motormoment tq_Eng_Zug, das Motormoment tq_Eng_Zug wird also vollständig kompensiert. Folglich ist das Getriebe am Ausgang des Doppelkupplungsgetriebeteils DKG bzw. am Getriebeeingang des Hauptgetriebes HG in der folgenden kurzen Phase P3 drehmomentfrei und der Istgang g_act kann lastfrei ausgelegt werden.

Nach dem Auslegen des Ganges g_act erfolgt die Drehzahlanpassung an die Drehzahl n_tgt des Folgeganges bzw. Zielganges g_tgt innerhalb einer Zeitspanne Δt_12,1 in der vierten Schaltphase P4. Dies ist der Zeitraum für die aktive Synchronisation zwischen dem Zeitpunkt t_1 und einem Folgezeitpunkt t_2,1, ohne Wartezeit, da keine Schaltung im Doppelkupplungsgetriebe DKG erfolgt. Bei einer Schaltung im Doppelkupplungsgetriebeteil DKG kann sich eine Verzögerung ergeben, falls diese zum Ende des Lastabbaus noch nicht abgeschlossen ist, so dass die Zieldrehzahl erst zu einem späteren Zeitpunkt t_12,2 erreicht würde.

Während der Phase der Drehzahlanpassung P4 ist das Kupplungsmoment tq_K2 der Kupplung K2 und das sich daraus ergebende Doppelkupplungsmoment bzw. Verspannungsmoment tq_DK außerhalb eines Übergangsbereiches am Anfang und am Ende dieser Phase P4 im Wesentlichen konstant. Die Drehzahlen n_in_1_act und n_in_2_act der Kupplungen K1, K2 und die Drehzahl n_Eng_act des Motors M fallen stetig ab. Sobald die nach der Schaltung lastführende Kupplung, im vorliegenden Beispiel also K1, die Zieldrehzahl n_tgt erreicht hat, ist der Synchronlauf für den neuen Zielgang gegeben und der Zielgang g_tgt kann in der Phase P5 eingeschaltet werden.

Für die Zeit bis zum Erreichen des Synchronlaufs und Einschalten des Zielganges g_tgt kann bei haftender Kupplung K1 und schlupfender Kupplung K2, wie im vorgenannten Beispiel, folgende allgemeine Abschätzung getroffen werden:

$$\Delta t_1 = \frac{\Delta \omega_{M1}}{tq_{Mot} + tq_{M1}} \cdot J_{M,Red,1}$$

Dabei ist Δω_M1 die Winkelgeschwindigkeitsdifferenz der Schaltung am Motor, tq_Mot das Motormoment, tq_M1 das Lastmoment auf den Motor bei haftender K1, und $J_{M,Red,1} = J_M + \dfrac{J_{ab}}{i_1^2} + \dfrac{J_{K2} \cdot i_2^2}{i_1^2}$ das gesamte Massenträgheitsmoment bezogen (reduziert) auf die Motorebene, mit J_M = Massenträgheitsmoment des Motors, J_ab = Massenträgheitsmoment des Abtriebs, und J_K2 = Massenträgheitsmoment der schlupfenden Kupplung K2.

In der abschließenden Phase P6 der Zugschaltung erfolgt der Lastaufbau im neuen Gang. Dazu wird die schlupfende Kupplung K2 vollständig geöffnet, so dass das Verspannungsmoment tq_DK gelöst und das Motormoment tq_Eng_Zug auf die angetriebenen Fahrzeugräder übertragen wird. Damit ist der Schaltvorgang abgeschlossen.

Andere Schaltabläufe als der in Fig. 3 gezeigte Schaltablauf, beispielsweise solche mit einem Gangwechsel im Doppelkupplungsgetriebeteil DKG und/oder mit einem Wechsel der lastführenden Kupplung, können analog durchgeführt werden. Als Randbedingung soll dafür gelten:

a) Für performanceorientierte Zughochschaltungen, d.h. auf kurze Schaltzeiten optimierte Schaltungen, bei denen der Lastabbau mit Hilfe der Kupplungsverspannung ohne Motormomentreduzierung erfolgt, ist im Regelfall die Abtriebsdrehzahl n_ab am Doppelkupplungsgetriebeteil DKG bzw. am Hauptgetriebeeingang nach der Schaltung kleiner als vor der Schaltung, also $n_{ab,1} < n_{ab,0}$, sofern sich die Fahrzeuggeschwindigkeit bis zum Gangeinschalten nicht signifikant ändert. In diesem Fall wird die schnellere Kupplung K1 im Haften und die langsamere Kupplung K2 im Schlupf betrieben. Besteht eine Gangauswahl im Doppelkupplungsgetriebeteil DKG, wird im aktuell ungenutzten Doppelkupplungsgetriebezweig DKG1, DKG2 vorzugsweise ein Gang so gewählt, dass die Übersetzung größer als die des aktuellen Ganges wird. Damit wird die jeweils zu Beginn der Schaltung momentfreie Kupplung zur schnelleren Kupplung K1 und zur haftenden Kupplung beim Lastabbau.

b) Für performanceorientierte Zugrückschaltungen ist entsprechend im Regelfall die Abtriebsdrehzahl n_ab am Doppelkupplungsgetriebeteil DKG bzw. am Hauptgetriebeeingang nach der Schaltung größer als vor der Schaltung, also: $n_{ab,1} > n_{ab,0}$. In diesem Fall wird die langsamere Kupplung K2 im Haften und die schnellere Kupplung K1 im Schlupf betrieben. Der Gang im aktuell ungenutzten Doppelkupplungsgetriebezweig DKG1, DKG2 wird dann vorzugsweise so gewählt, dass die Übersetzung kleiner als die des aktuellen Ganges wird. Damit wird die jeweils zu Beginn der Schaltung momentfreie Kupplung zur langsameren Kupplung K2 und zur schlupfenden Kupplung beim Lastabbau.

c) Für den Fall, dass kein passender Gang zur Verfügung steht, wird ein Gang im aktuell ungenutzten Doppelkupplungsgetriebezweig DKG1, DKG2 gewählt, der ein größtmögliches Lastmoment auf den Motor zur Folge hat.

Insgesamt kann dadurch jeweils der Antriebsmotor zur Erhaltung des Ladedrucks oder zumindest zur Begrenzung des Ladedruckverlustes ausreichend belastet und bei Hochschaltungen gleichzeitig eine relativ schnelle Drehzahlanpassung an den Zielgang erreicht werden, um kurze Schaltzeiten bei gleichzeitiger Vermeidung des Turbolochs zu ermöglichen.

Bezugszeichenliste

| | |
|---|---|
| AB | Abtriebswelle |
| AW | Antriebswelle |
| DK | Doppelkupplung |
| DKG | Doppelkupplungsgetriebe |
| DKG1 | Doppelkupplungsgetriebezweig |
| DKG2 | Doppelkupplungsgetriebezweig |
| $\Delta t\_1$ | Drehzahlanpassungszeit, K1 haftet |
| $\Delta t\_{12,1}$ | Drehzahlanpassungszeit zwischen t_1 und t_2,1 |
| $\Delta \omega\_M1$ | Winkelgeschwindigkeitsdifferenz am Motor, K1 haftet |
| g_tgt | Zielgang |
| g_act | Istgang |
| GE1 | Getriebeeingangswelle |
| GE2 | Getriebeeingangswelle |
| HG | Hauptgetriebe |
| i_1 | Eingangskonstante, Übersetzung DKG-Zweig |
| i-2 | Eingangskonstante, Übersetzung DKG-Zweig |
| i_HG1 | Hauptgetriebegang |
| i_HG2 | Hauptgetriebegang |
| J_ab | Massenträgheitsmoment des Abtriebs |
| J_K2 | Massenträgheitsmoment der Kupplung K2 |
| J_M,Red,1 | Massenträgheitsmoment, Motorebenenbezug, K1 haftet |
| J_M | Massenträgheitsmoment des Motors |
| K1 | Kupplung der Doppelkupplung |
| K2 | Kupplung der Doppelkupplung |
| M | Antriebsmotor/Verbrennungsmotor |
| n | Drehzahl |
| n_ab | Abtriebsdrehzahl am DKG-Ausgang, HG-Eingang |
| n_ab_HG | Abtriebsdrehzahl am Hauptgetriebe |

| n_ab,0 | Abtriebsdrehzahl vor der Schaltung |
|---|---|
| n_ab,1 | Abtriebsdrehzahl nach der Schaltung |
| n_Eng_act | Istdrehzahl des Antriebsmotors |
| n_in_1_act | Getriebeeingangsdrehzahl Kupplung K1 |
| n_in_2_act | Getriebeeingangsdrehzahl Kupplung K2 |
| n_K1 | Kupplungsausgangsdrehzahl |
| n_K2 | Kupplungsausgangsdrehzahl |
| n_M | Motordrehzahl |
| n_tgt | Zieldrehzahl Motor, Getriebeeingang |
| P1 - P6 | Schaltablaufphasen |
| S | Schaltkupplung, Klauenkupplung |
| t | Zeit |
| t_0 | Zeitpunkt |
| t_1 | Zeitpunkt |
| t_2,1 | Zeitpunkt |
| tq | Moment |
| tq_Eng_Zug | Motormoment bei Zugschaltung |
| tq_DK | Doppelkupplungsmoment/Verspannungsmoment |
| tq_K1 | Moment an Kupplung K1 |
| tq_K2 | Moment an Kupplung K2 |
| tq_M | Moment auf den Motor |
| tq_M1 | Lastmoment auf den Motor, wenn K1 haftet |
| tq_Mot | Motormoment |
| VW1 | Vorgelegewelle |
| z11 | Zahnrad |
| z12 | Zahnrad |
| z21 | Zahnrad |
| z22 | Zahnrad |
| z31 | Zahnrad |
| z32 | Zahnrad |
| z41 | Zahnrad |
| z42 | Zahnrad |

**Patentansprüche**

1. Verfahren zur Steuerung eines Antriebsstrangs umfassend einen Antriebsmotor (M) und ein Teildoppelkupplungsgetriebe , beispielsweise eines Nutzfahrzeuges, mit einem ersten Teilgetriebe, das als ein Doppelkupplungsgetriebe (DKG) ausgebildet ist, mit einer Doppelkupplung (DK), die eine erste Kupplung (K1) und eine zweite Kupplung (K2) umfasst, über die das Doppelkupplungsgetriebe (DKG) mit dem Antriebsmotor (M) wirkverbindbar ist, und mit einem dem Doppelkupplungsgetriebe (DKG) in dem Antriebsstrang nachgeordneten zweiten Teilgetriebe, das als ein zugkraftunterbrechend schaltendes Hauptgetriebe (HG) ausgebildet ist, **dadurch gekennzeichnet, dass** während einer Zugschaltung mit einem Gangwechsel im Hauptgetriebe (HG) die erste Kupplung (K1) und die zweite Kupplung (K2) zumindest teilweise geschlossen werden, so dass sie gegeneinander verspannt werden, wobei ein dem Antriebsmotor (M) entgegenwirkendes Moment erzeugt wird, wodurch ein Ladedruck des als turboaufgeladener Verbrennungsmotor ausgebildeten Antriebsmotors während der Zugschaltung weitgehend aufrechterhalten oder zumindest in zeitlicher Nähe zu der Zugschaltung aufgebaut wird.

2. Verfahren nach Anspruch 1, **dadurch gekennzeichnet, dass** zum Aufbau eines Verspannungsmomentes(tq_DK) der Doppelkupplung (DK) eine der beiden Kupplungen (K1, K2) im Haften und die andere der beiden Kupplungen (K1, K2) im Schlupf betrieben wird.

3. Verfahren nach Anspruch 1, **dadurch gekennzeichnet, dass** zum Aufbau eines Verspannungsmomentes (tq_DK) der Doppelkupplung (DK) beide Kupplungen (K1, K2) im Schlupf betrieben werden.

4. Verfahren nach einem der Ansprüche 1 bis 3, **dadurch gekennzeichnet, dass** zu Beginn der Schaltung ein Lastabbau im Hauptgetriebe (HG) erfolgt, indem ein Motormoment reduziert und bedarfsweise die aktuell lastführende Kupplung (K1, K2) geöffnet wird, bis der aktuell im Hauptgetriebe (HG) eingelegte Gang weitgehend lastfrei ausgelegt werden kann, und dass unmittelbar nach dem Auslegen des Ganges die Doppelkupplung (DK) verspannt wird, wobei ein dem Antriebsmotor (M) entgegenwirkendes Moment erzeugt wird und eine Drehzahlanpassung zur Einstellung eines Synchronlaufs an den zu schaltenden Komponenten des einzulegenden Ganges erfolgt, und dass nach dem Einlegen des neuen Ganges ein Lastaufbau im Hauptgetriebe (HG) erfolgt, wobei die Verspannung der Doppelkupplung (DK) gelöst wird, indem eine der beiden Kupplungen (K1, K2) geöffnet wird und die andere Kupplung (K1, K2) als lastführende Kupplung im neuen Gang geschlossen bleibt oder geschossen wird.

**5.** Verfahren nach einem der Ansprüche 1 bis 3, **dadurch gekennzeichnet, dass** zu Beginn der Schaltung ein Lastabbau im Hauptgetriebe (HG) erfolgt, indem ein dem Antriebsmotor (M) entgegenwirkendes Moment durch Verspannen der Doppelkupplung (DK) erzeugt wird, wobei die aktuell nicht lastführende der beiden Kupplungen (K1, K2) in Schlupf gebracht und die aktuell lastführende Kupplung (K1, K2) geschlossen oder zumindest teilgeschlossen bleibt, bis der aktuell im Hauptgetriebe (HG) eingelegte Gang weitgehend lastfrei ausgelegt werden kann, und dass nach dem Auslegen des Ganges eine Drehzahlanpassung zur Einstellung eines Synchronlaufs an den zu schaltenden Komponenten des einzulegenden Ganges erfolgt, und dass nach dem Einlegen des neuen Ganges ein Lastaufbau im Hauptgetriebe (HG) erfolgt, wobei die Verspannung der Doppelkupplung (DK) gelöst wird, indem eine der beiden Kupplungen (K1, K2) geöffnet wird und die andere Kupplung (K1, K2) als lastführende Kupplung im neuen Gang geschlossen bleibt oder geschossen wird.

**6.** Verfahren nach einem der Ansprüche 4 oder 5, **dadurch gekennzeichnet, dass** die Drehzahlanpassung unabhängig von im Hauptgetriebe (HG) vorhandenen Synchronschaltkupplungen erfolgt.

**7.** Verfahren nach einem der Ansprüche 4 bis 6, **dadurch gekennzeichnet, dass** Kupplungsmomente bei der Drehzahlanpassung so eingestellt werden, dass eine Drehzahl eines Zielganges mit einer vorgegebenen Dynamik erreicht wird.

**8.** Verfahren nach einem der Ansprüche 2 oder 3 und 4, 5, 6 oder 7, **dadurch gekennzeichnet, dass** über eine Motorsteuerung eine maximale mögliche Kraftstoffeinspritzmenge des Antriebsmotors (M) vorgegeben wird und die Drehzahlanpassung durch Regeln des Verspannungsmomentes der Doppelkupplung (DK) erfolgt.

**9.** Verfahren nach einem der Ansprüche 2 oder 3, **dadurch gekennzeichnet, dass** über eine Motorsteuerung eine Zieldrehzahl vorgegeben wird, und dass das Verspannungsmoment der Doppelkupplung (DK) derart variiert wird, dass diese Zieldrehzahl mittels der Motorsteuerung erreichbar ist.

**10.** Verfahren nach einem der Ansprüche 1 bis 9, **dadurch gekennzeichnet, dass** eine ladedruckrelevante Verspannung der Doppelkupplung (DK) bei einer Zugschaltung immer dann erfolgt, wenn ein Fahrwiderstand nach der Zugschaltung in einem neu eingelegten Gang in seiner Wirkung ein Saugmoment des Motors (M) übersteigen würde.

**11.** Verfahren nach einem der Ansprüche 1 bis 10, **dadurch gekennzeichnet, dass** eine ladedruckrelevante Verspannung der Doppelkupplung (DK) bei einer Zugschaltung immer dann erfolgt, wenn ein durch einen Kickdown oder eine Fahrpedalstellung angezeigter Leistungswunsch einen vorgegebenen Schwellwert übersteigt.

**12.** Verfahren nach einem der Ansprüche 1 bis 11, **dadurch gekennzeichnet, dass** eine ladedruckrelevante Verspannung der Doppelkupplung (DK) bei einer Zugschaltung immer dann erfolgt, wenn dies anhand eines vorab bestimmten Komfortmaßes oder Performancemaßes als zweckmäßig erkannt ist.

**13.** Verfahren nach einem der Ansprüche 1 bis 12, **dadurch gekennzeichnet, dass** eine ladedruckrelevante Verspannung der Doppelkupplung (DK) bei einer Zugschaltung nur dann erfolgt, wenn bei einer aktuell festgestellten Kupplungsbelastung eine vorab bestimmte Belastungsreserve zumindest einer der beiden Kupplungen (K1, K2) dies zulässt.

**14.** Verfahren nach Anspruch 13, **dadurch gekennzeichnet, dass** bei einer Bestimmung der Belastungsreserve der im Schlupf angesteuerten Kupplung (K1, K2) kurzfristig zu erwartende nachfolgende Einsätze berücksichtigt werden.

**15.** Verfahren nach Anspruch 13 oder 14, **dadurch gekennzeichnet, dass** bei einer Bestimmung der Belastungsreserve der im Schlupf angesteuerten Kupplung (K1, K2) kupplungsspezifische, umgebungsspezifische und/oder für einen Einsatzbereich des Fahrzeuges spezifische Parameter, berücksichtigt werden.

**Claims**

1. Method for controlling a drive train comprising a subsidiary twin-clutch gearbox and a drive engine (M) wherein shifting operations of the subsidiary twin-clutch gearbox, for example of a utility vehicle, having a first subsidiary gearbox which is embodied as a twin-clutch gearbox (DKG), having a twin clutch (DK) which comprises a first clutch (K1) and a second clutch (K2) via which the twin-clutch gearbox (DKG) is operatively connected to the drive engine (M), and having a second subsidiary gearbox which is arranged downstream of the twin-clutch gearbox (DKG) in the drive train and is embodied as a main gearbox (HG) which shifts with interruption of the traction force, **characterized in that** during a traction shifting operation with a change of gear in the main gearbox (HG) the first clutch (K1) and the second clutch (K2) are at least partially closed, with the result that they are stressed with respect to one another, wherein a torque which counteracts the drive engine (M) is generated, as a result of which a charge pressure of the drive engine which is embodied as a turbo-charged internal combustion engine is largely maintained during the traction shifting operation or is built up at least in chronological proximity to the traction shifting operation.

2. Method according to Claim 1, **characterized in that** in order to build up a stress torque (tq_DK) of the twin clutch (DK) one of the two clutches (K1, K2) is operated in the gripping mode and the other of the two clutches (K1, K2) in the slipping mode.

3. Method according to Claim 1, **characterized in that** in order to build up a stress torque (tq_DK) of the twin clutch (DK) both clutches (K1, K2) are operated in the slipping mode.

4. Method according to one of Claims 1 to 3, **characterized in that** at the start of the shifting operation a load reduction in the main gearbox (HG) takes place **in that** an engine torque is reduced and, if necessary, the currently load-conducting clutch (K1, K2) is opened until the gear which is currently engaged in the main gearbox (HG) can be disengaged largely free of load, and **in that** directly after the disengagement of the gear the twin clutch (DK) is stressed, wherein a torque which counteracts the drive engine (M) is generated and the rotational speed is adapted in order to set synchronous running at the components to be shifted in the gear which is to be engaged, and **in that** after the engagement of the new gear a build up of the load in the main gearbox (HG) takes place, wherein the stressing of the twin clutch (DK) is released **in that** one of the two clutches (K1, K2) is opened and the other clutch (K1, K2) remains closed or is closed as the load-conducting clutch in the new gear.

5. Method according to one of Claims 1 to 3, **characterized in that** at the start of the shifting operation a load reduction in the main gearbox (HG) takes place **in that** a torque which counteracts the drive engine (M) is generated by stressing the twin clutch (DK), wherein the clutch of the two clutches (K1, K2) which is currently not load-conducting is placed in the slipping mode and the currently load-conducting clutch (K1, K2) remains closed or at least partially closed until the gear which is currently engaged in the main gearbox (HG) can be disengaged largely free of load, and **in that** after the disengagement of the gear the rotational speed is adapted in order to set synchronous running at the components to be shifted in the gear which is to be engaged, and **in that** after the engagement of the new gear a build up of the load in the main gearbox (HG) takes place, wherein the stressing of the twin clutch (DK) is released **in that** one of the two clutches (K1, K2) is opened and the other clutch (K1, K2) remains closed or is closed as the load-conducting clutch in the new gear.

6. Method according to one of Claims 4 and 5, **characterized in that** the rotational speed is adapted independently of synchronous clutches which are present in the main gearbox (HG).

7. Method according to one of Claims 4 to 6, **characterized in that** clutch torques are set during the adaptation of the rotational speed in such a way that a rotational speed of a target gear is reached with a predefined dynamic.

8. Method according to one of Claims 2 and 3 and 4, 5, 6 and 7, **characterized in that** a maximum possible fuel injection quantity of the drive engine (M) is predefined by means of an engine controller, and the adaptation of the rotational speed is carried out by regulating the stress torque of the twin clutch (DK).

9. Method according to one of Claims 2 and 3, **characterized in that** a target rotational speed is predefined by means of an engine controller, and **in that** the stress torque of the twin clutch (DK) is varied in such a way that this target rotational speed can be reached by means of the engine controller.

10. Method according to one of Claims 1 to 9, **characterized in that** charging-pressure-relevant stressing of the twin clutch (DK) takes place in the case of a traction shifting operation whenever driving resistance after the traction shifting operation in a newly engaged gear would exceed in its effect a suction torque of the engine (M).

11. Method according to one of Claims 1 to 10, **characterized in that** charging-pressure-relevant stressing of the twin clutch (DK) in the case of a traction shifting operation takes place whenever a power request indicated by a kick down or a position of the accelerator pedal exceeds a predefined threshold value.

12. Method according to one of Claims 1 to 11, **characterized in that** charging-pressure-relevant stressing of the twin clutch (DK) in the case of a traction shifting operation takes place whenever this is known to be expedient on the basis of a previously determined comfort measure or performance measure.

13. Method according to one of Claims 1 to 12, **characterized in that** charging-pressure-relevant stressing of the twin clutch (DK) in the case of a traction shifting operation takes place only when, in the case of a currently detected clutch load, a previously determined load reserve of at least one of the two clutches (K1, K2) permits this.

14. Method according to Claim 13, **characterized in that** subsequent deployments which are to be expected in the short term are taken into account when determining the load reserve of the clutch (K1, K2) which is actuated in the slipping mode.

15. Method according to Claim 13 or 14, **characterized in that** parameters which are clutch-specific, surroundings-specific and/or specific to a range of deployment of the vehicle are taken into account when determining the load reserve of the clutch (K1, K2) which is actuated in the slipping mode.

**Revendications**

1. Procédé de commande d'une chaîne cinématique comprenant une transmission à double embrayage partielle et un moteur d'entraînement (M), dans lequel les changements de rapports de la transmission à double embrayage partielle, par exemple pour un véhicule utilitaire, comprenant une première transmission partielle qui est réalisée sous forme de transmission à double embrayage (DKG), comprenant un double embrayage (DK) qui comprend un premier embrayage (K1) et un deuxième embrayage (K2), par le biais duquel la transmission à double embrayage (DKG) peut être connectée fonctionnellement au moteur d'entraînement (M), et comprenant une deuxième transmission partielle disposée après la transmission à double embrayage (DKG) dans la chaîne cinématique, laquelle est réalisée sous forme de transmission principale (HG) effectuant le changement de rapport avec interruption de la force de traction, **caractérisé en ce que** pendant un changement de rapport en traction avec un changement de vitesse dans la transmission principale (HG), le premier embrayage (K1) et le deuxième embrayage (K2) sont au moins en partie fermés de sorte qu'ils soient serrés l'un contre l'autre, un couple s'opposant au moteur d'entraînement (M) étant produit, de sorte qu'une pression de suralimentation du moteur d'entraînement réalisé sous forme de moteur à combustion interne à suralimentation pendant le changement de rapport en traction soit essentiellement maintenue ou soit augmentée au moins à proximité temporelle du changement de rapport en traction.

2. Procédé selon la revendication 1, **caractérisé en ce que** pour l'augmentation d'un couple de serrage (tq_DK) du double embrayage (DK), l'un des deux embrayages (K1, K2) fonctionne en adhérence et l'autre des deux embrayages (K1, K2) fonctionne en patinage.

3. Procédé selon la revendication 1, **caractérisé en ce que** pour l'augmentation d'un couple de serrage (tq_DK) du double embrayage (DK), les deux embrayages (K1, K2) fonctionnent en patinage.

4. Procédé selon l'une quelconque des revendications 1 à 3, **caractérisé en ce qu'**au début du changement de rapport, une diminution de charge dans la transmission principale (HG) a lieu, par le fait qu'un couple moteur est réduit et au besoin l'embrayage guidant actuellement la charge (K1, K2) est ouvert, jusqu'à ce que la vitesse actuellement enclenchée dans la transmission principale (HG) puisse être sortie essentiellement sans charge, et **en ce que** directement après la sortie de la vitesse, le double embrayage (DK) est serré, un couple s'opposant au moteur d'entraînement (M) étant produit et une adaptation de la vitesse de rotation ayant lieu pour l'ajustement d'un fonctionnement synchrone au niveau des composants à commuter de la vitesse à enclencher, et **en ce qu'**après l'enclenchement de la nouvelle vitesse, une augmentation de charge a lieu dans la transmission principale (HG), le serrage du double embrayage (DK) étant relâché par le fait que l'un des deux embrayages (K1, K2) est ouvert et l'autre embrayage (K1, K2) reste fermé ou est fermé en tant qu'embrayage guidant la charge dans la nouvelle vitesse.

**5.** Procédé selon l'une quelconque des revendications 1 à 3, **caractérisé en ce qu'**au début du changement de rapport, une diminution de charge dans la transmission principale (HG) a lieu, par le fait qu'un couple s'opposant au moteur d'entraînement (M) est produit par serrage du double embrayage (DK), l'embrayage ne guidant pas la charge actuellement parmi les deux embrayages (K1, K2) étant amené à patiner et l'embrayage guidant actuellement la charge (K1, K2) étant fermé ou restant au moins partiellement fermé, jusqu'à ce que la vitesse actuellement enclenchée dans la transmission principale (HG) puisse être sortie essentiellement sans charge, et **en ce qu'**après la sortie de la vitesse, une adaptation de la vitesse de rotation a lieu pour l'ajustement d'un fonctionnement synchrone au niveau des composants à commuter de la vitesse à enclencher, et **en ce qu'**après l'enclenchement de la nouvelle vitesse, une augmentation de charge a lieu dans la transmission principale (HG), le serrage du double embrayage (DK) étant relâché par le fait que l'un des deux embrayages (K1, K2) est ouvert et l'autre embrayage (K1, K2) reste fermé ou est fermé en tant qu'embrayage guidant la charge dans la nouvelle vitesse.

**6.** Procédé selon l'une quelconque des revendications 4 ou 5, **caractérisé en ce que** l'adaptation de la vitesse de rotation s'effectue indépendamment des embrayages de changement de rapport synchrones prévus dans la transmission principale (HG).

**7.** Procédé selon l'une quelconque des revendications 4 à 6, **caractérisé en ce que** les couples d'embrayage sont ajustés lors de l'adaptation de la vitesse de rotation de telle sorte qu'une vitesse de rotation d'une vitesse cible soit obtenue avec une dynamique prédéfinie.

**8.** Procédé selon l'une quelconque des revendications 2 ou 3 et 4, 5, 6 ou 7, **caractérisé en ce qu'**une quantité d'injection de carburant maximale possible du moteur d'entraînement (M) est prédéfinie par le biais d'une commande de moteur et l'adaptation de la vitesse de rotation a lieu par régulation du couple de serrage du double embrayage (DK).

**9.** Procédé selon l'une quelconque des revendications 2 ou 3, **caractérisé en ce qu'**une vitesse de rotation cible est prédéfinie par le biais d'une commande de moteur et **en ce que** le couple de serrage du double embrayage (DK) est modifié de telle sorte que cette vitesse de rotation cible puisse être obtenue au moyen de la commande de moteur.

**10.** Procédé selon l'une quelconque des revendications 1 à 9, **caractérisé en ce qu'**un serrage du double embrayage (DK) pertinent pour la pression de suralimentation, dans le cas d'un changement de rapport en traction, s'effectue toujours lorsqu'une résistance à l'avancement après le changement de rapport en traction dans une vitesse nouvellement enclenchée dépasserait dans son action un couple d'admission du moteur (M).

**11.** Procédé selon l'une quelconque des revendications 1 à 10, **caractérisé en ce qu'**un serrage du double embrayage (DK) pertinent pour la pression de suralimentation, dans le cas d'un changement de rapport en traction, s'effectue toujours lorsqu'un souhait de puissance indiqué par un pied au plancher ou une position de la pédale d'accélération dépasse une valeur seuil prédéfinie.

**12.** Procédé selon l'une quelconque des revendications 1 à 11, **caractérisé en ce qu'**un serrage du double embrayage (DK) pertinent pour la pression de suralimentation dans le cas d'un changement de rapport en traction s'effectue toujours lorsque ceci est détecté comme étant judicieux à l'aide d'une mesure de confort ou d'une mesure de performance déterminée préalablement.

**13.** Procédé selon l'une quelconque des revendications 1 à 12, **caractérisé en ce qu'**un serrage du double embrayage (DK) pertinent pour la pression de suralimentation dans le cas d'un changement de rapport en traction s'effectue seulement, dans le cas où l'on constate actuellement, une sollicitation de l'embrayage lorsqu'une réserve de sollicitation déterminée préalablement d'au moins l'un des deux embrayages (K1, K2) le permet.

**14.** Procédé selon la revendication 13, **caractérisé en ce que** dans le cas d'une détermination de la réserve de sollicitation de l'embrayage commandé en patinage (K1, K2), on tient compte d'utilisations subséquentes devant être attendues à court terme.

**15.** Procédé selon la revendication 13 ou 14, **caractérisé en ce que** dans le cas d'une détermination de la réserve de sollicitation de l'embrayage commandé en patinage (K1, K2), on tient compte de paramètres spécifiques à l'embrayage, à l'environnement et/ou à une plage d'utilisation du véhicule.

EP 2 627 932 B1

DKG

DKG1  DKG2        HG

i_1  i_2      i_HG1    i_HG2

AW GE1 GE2 z11 z21    z31     z41  VW1

tq_vw1

n_vw1

tq_ab_HG

n_ab_HG

M  DK K1 K2  z12  z22     z32  S1  z42  AB

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008008496 A1
- DE 102010028076

- DE 102005033027 A1